# EUROPEAN PATENT SPECIFICATION

(11) **EP 4 134 326 B1**
(45) Date of publication and mention of the grant of the patent: **17.06.2026**
(21) Application number: 21783805.1
(22) Date of filing: 26.03.2021
(51) Int. Cl.: B65D 65/40, C09J 167/02, B32B 15/09, C08G 63/668, C09J 167/00

(54) **POLYESTER RESIN, AQUEOUS DISPERSION AND ADHESIVE COMPOSITION USING SAME**
POLYESTERHARZ, WÄSSRIGE DISPERSION UND HAFTZUSAMMENSETZUNG DAMIT
RÉSINE DE POLYESTER, DISPERSION AQUEUSE ET COMPOSITION ADHÉSIVE LES UTILISANT

(30) Priority: 06.04.2020 JP 2020068162
(43) Date of publication of application: 15.02.2023
(73) Proprietor: TOYOBO MC Corporation, Osaka-shi, Osaka 530-0001 (JP)
(72) Inventor: SAKAMOTO, Yasuhiro, Otsu-shi, Shiga 520-0292 (JP); MIKAMI, Tadahiko, Otsu-shi, Shiga 520-0292 (JP); OKAJIMA, Hiroki, Otsu-shi, Shiga 520-0292 (JP)
(74) Representative: Müller-Boré & Partner Patentanwälte PartG mbB
(86) International application number: PCT/JP2021/013043
(87) International publication number: WO 2021/205916

(56) References cited:
- CN-A- 101 432 333
- JP-A- 2001 088 426
- JP-A- 2005 126 619
- JP-A- 2005 126 619
- JP-A- 2007 001 292
- JP-A- 2009 536 646
- JP-A- 2014 209 162
- JP-A- 2016 525 465
- JP-A- 2019 089 342
- US-A- 4 540 749
- US-A- 5 744 538
- US-A- 5 780 151
- US-B2- 7 226 664

## Description

### Technical Field

The present invention relates to a polyester resin and an aqueous dispersion of polyester resin. Further, the present invention relates to an adhesive composition, a laminated product, and a packaging material using the same.

### Background Art

Polyester resins have been widely used as raw materials for resin compositions used for paints, coating agents, adhesives, and the like. A polyester resin is generally constituted from a polycarboxylic acid and a polyhydric alcohol. The selection and the combination of the polycarboxylic acid and the polyhydric alcohol and the magnitude of molecular weights can be freely controlled. The resulting polyester resin has been used in various applications including paint applications and adhesive applications.

In a molecular designing of a polyester resin, selection of a copolymerization component is important. Polycarboxylic acid components and polyhydric alcohol components are roughly classified into aromatic, aliphatic, and alicyclic types. By appropriately selecting these components, the glass transition temperature indicating the flexibility of polyester resin can be controlled. As to a use form, it is common to use an organic solvent-dissolved product or an aqueous dispersion product to be applied to a substrate. Particularly in recent years, an aqueous dispersion has been required due to environmental problems.

Recently, laminated products prepared by applying a heat-sealable adhesive composition to a substrate such as polyester-based film and aluminum foil and laminating them with each other have been used as a lid member for various packaging containers made of polystylene, polyvinyl chloride, A-PET (amorphous polyethylene terephthalate) or polypropylene. Accordingly, there has been demanded an aqueous adhesive composition for heat-sealing which can be used for food applications and which exhibits excellent adhesiveness to all of these packaging containers.

For example, Patent Document 1 proposes an itaconic acid-based copolymerized polyester and a blend thereof. Patent Document 2 proposes an aqueous dispersion containing a polyester resin (A) having a glass transition temperature of 50°C or higher and a polyester resin (B) having a glass transition temperature of 30°C or lower. Patent Document 3 relates to a laminated polyester film with excellent adhesive properties for use in various laminating materials and which also has excellent solvent resistance.

### Prior Art Documents

### Patent Documents

Patent Document 1: Japanese Patent No. 5455377
Patent Document 2: Japanese Patent No. 5241232 Patent Document 3: US 7 226 664 B2

### Disclosure of the Invention

### Problem that the Invention is to Solve

In Patent Document 1, an aluminum foil to which a heat-sealable adhesive composition is applied exhibits good adhesiveness to polystylene and polypropylene. However, a step for further modifying the polymer is necessary for preparing the resin. In addition, much amount of an organic solvent is necessary for the adhesive. Accordingly, there are problems in terms of production and environment. Patent Document 2 relates to an aqueous dispersion of polyester resin. In Patent Document 2, the heat-sealable property is evaluated only for a case between PET films. Generally, PET films are easily adhered by polyester resin. There is a fear that the aqueous dispersion of Patent Document 2 is inferior in the adhesiveness to various substrates such as polystylene, polyvinyl chloride, A-PET or polypropylene.

The present inventors conducted intensive studies for solving the above problems. As a result, they found a heat-sealable polyester resin which can be used for food and pharmaceutical applications and which exhibits excellent adhesiveness to various containers made of polystylene, polyvinyl chloride, or A-PET, each having different property. The present invention has been completed on the basis of such findings.

That is, the aim of the present invention is to provide a polyester resin which exhibits excellent adhesiveness to various substrates such as polystylene, polyvinyl chloride, or A-PET; and to provide an aqueous dispersion of such polyester resin, as well as an adhesive composition, a laminated product, and a packaging material using the same.

### Means for Solving the Problem

As a result of extensive investigations, the inventors of the present application have found that the above problem can be solved by the following means and achieved the present invention.

Thus, the present invention comprises the following constitutions.

A polyester resin containing a polycarboxylic acid component and a polyhydric alcohol component as constitution units, wherein, when the total amount of the polyhydric alcohol component is taken as 100 mol%, the content of diethylene glycol component is 60 mol% or more, and wherein the glass transition temperature of the polyester resin is 20°C or lower, wherein, when the total amount of the polycarboxylic acid component is taken as 100 mol%, the content of an aromatic dicarboxylic acid component having a sulfonate group is 0.1 mol% or less, and wherein the acid value of the polyester resin is 150 to 500 eq/t.

An aqueous dispersion of polyester resin containing the polyester resin.

An adhesive composition containing the aqueous dispersion of polyester resin.

A laminated product prepared by laminating an adhesive layer formed of the adhesive composition, and a thermoplastic resin film or an aluminum foil.

Preferably, the thickness of the adhesive layer is in the range of 1 to 10 µm.

The laminated product can be preferably used as a packaging material.

The packaging material can be preferably used as a blister pack, a lid member and a food packaging container.

### Advantages of the Invention

The polyester resin and aqueous dispersion of the present invention exhibit excellent adhesiveness to various substrates such as polystylene, polyvinyl chloride, or A-PET. Accordingly, a heat-sealable adhesive composition can be easily prepared and can be suitably used as a packaging material for food packaging etc.

### Best Mode for Carrying Out the Invention

As hereunder, an embodiment of the present invention will be explained in detail.

### <Polyester resin>

The polyester resin of the present invention has a chemical structure that can be obtained by polycondensation of a polycarboxylic acid and a polyhydric alcohol, wherein the polycarboxylic acid and the polyhydric alcohol each include one or two or more selected components.

The polycarboxylic acid constituting the polyester resin of the present invention is preferably an aromatic dicarboxylic acid, an alicyclic dicarboxylic acid, and/or an aliphatic dicarboxylic acid.

When the total amount of the polycarboxylic acid component is taken as 100 mol%, the copolymerization amount of aromatic dicarboxylic acid is preferably 55 mol% or more, more preferably 60 mol% or more, and further preferably 65 mol% or more. When the copolymerization amount of aromatic dicarboxylic acid is less than 55 mol%, water resistance may be deteriorated.

When the total amount of the polycarboxylic acid component is taken as 100 mol%, the copolymerization amount of alicyclic dicarboxylic acid and/or aliphatic dicarboxylic acid is preferably 50 mol% or less, more preferably 40 mol% or less, and further preferably 30 mol% or less. By setting the copolymerization amount of alicyclic dicarboxylic acid and/or aliphatic dicarboxylic acid to 50 mol% or less, hydrolysis resistance of the polyester resin is improved, and water resistance is improved. When the alicyclic and/or aliphatic dicarboxylic acid is copolymerized, the copolymerization amount thereof is preferably 5 mol% or more and more preferably 10 mol% or more. By setting the copolymerization amount of alicyclic dicarboxylic acid and/or aliphatic dicarboxylic acid to 5 mol% or more, adhesiveness is improved.

As to suitable specific examples of the polycarboxylic acid component, terephthalic acid, 1,4-cyclohexanedicarboxylic acid, isophthalic acid, orthophthalic acid, 2,6-naphthalenedicarboxylic acid, dimethyl 2,6-naphthalenedicarboxylate, trimellitic acid, adipic acid, sebacic acid, fumaric acid, maleic acid, or a dimer acid is preferably used. These components may be used singly or in combination of two or more kinds thereof. These compounds are approved raw materials described in FDA (Food and Drug Administration) Standard 175.300 (b) (3) (vii) (revised on April 1, 2014) and can be suitably used for food packaging materials. Among them, terephthalic acid, isophthalic acid, orthophthalic acid, 1,4-cyclohexanedicarboxylic acid, and/or sebacic acid are preferably used in combination from the viewpoint of adhesiveness to a substrate, water resistance, price, and the like.

When the total amount of the polyhydric alcohol component is taken as 100 mol%, the copolymerization amount of diethylene glycol needs to be 60 mol% or more. The copolymerization amount of diethylene glycol is preferably 65 mol% or more, more preferably 70 mol% or more, and the copolymerization amount of diethylene glycol may be even 100 mol%. By setting the copolymerization amount of diethylene glycol to 60 mol% or more, adhesiveness to various containers made of polystylene, polyvinyl chloride, or A-PET is improved. Diethylene glycol is a compound described in FDA Standard 175.300 (b) (3) (vii) (revised on April 1, 2014).

As to the polyhydric alcohol component other than diethylene glycol, it is preferable to use a compound described in FDA Standard 175.300 (b) (3) (vii) (revised on April 1, 2014). Specific examples thereof include ethylene glycol, 1,4-butanediol, triethylene glycol, propylene glycol, 2,2-dimethyl-1,3-propanediol, glycerol, mannitol, pentaerythritol, trimethylolethane, and trimethylolpropane. When the total amount of the polyhydric alcohol component is taken as 100 mol%, the copolymerization amount of these polyhydric alcohol components needs to be 40 mol% or less. The copolymerization amount of these polyhydric alcohol component is preferably 35 mol% or less, more preferably 30 mol% or less, and the copolymerization amount of these polyhydric alcohol component may be even 0 mol%. These polyhydric alcohols may be used singly or in combination of two or more kinds thereof.

It is also preferable to introduce a branched structure by copolymerizing a small amount of a tri- or higher functional polycarboxylic acid component and/or a tri- or higher functional polyhydric alcohol component in the polyester resin of the present invention. This makes it possible to form a more tough layer of an adhesive composition (hereinafter also referred to as an adhesive layer), and the effect of improving water resistance can be exhibited. Specific examples thereof include trimellitic anhydride, ethylene glycol bisanhydrotrimellitate, trimethylolpropane, glycerin, and pentaerythritol. When the total amount of the total polycarboxylic acid component(s) and total polyhydric alcohol component(s) is taken as 200 mol%, the copolymerization amount of the tri- or higher functional polycarboxylic acid component and/or the tri- or higher functional polyhydric alcohol component is preferably 0.5 mol% or more, and more preferably 1 mol% or more. Also, the copolymerization amount of the tri- or higher functional polycarboxylic acid component and/or the tri- or higher functional polyhydric alcohol component is preferably 5 mol% or less, more preferably 4 mol% or less, and further preferably 3 mol% or less.

When the total amount of the polycarboxylic acid component is taken as 100 mol%, the content of an aromatic dicarboxylic acid component having a sulfonate group is 0.1 mol% or less, and preferably 0 mol%. Since the aromatic dicarboxylic acid component having a sulfonate group is an acid component not approved by FDA, the polyester resin of the present invention can be used for food contact applications by reducing the amount of the aromatic dicarboxylic acid component having a sulfonate group. Examples of the aromatic dicarboxylic acid component having a sulfonate group include 5-sulfoisophthalic acid, 4-sulfonaphthalene-2,7-dicarboxylic acid, 5[4-sulfophenoxy]isophthalic acid, and alkali metal salts thereof. Examples of the alkali metal salt include lithium, sodium, and potassium. Specific examples thereof include sodium 5-sulfonatoisophthalate, potassium 5-sulfonatoisophthalate, sodium 4-sulfonaphthalene-2,7-dicarboxylate, and sodium 5[4-sulfophenoxy]isophthalate.

When the total amount of the polyhydric alcohol component is taken as 100 mol%, the content of a polyhydric alcohol component having a sulfonate group is preferably less than 1 mol%, more preferably 0.5 mol% or less, further preferably 0.1 mol% or less, and particularly preferably 0 mol%. Since the polyhydric alcohol component having a sulfonate group is an alcohol component not approved by FDA, the polyester resin of the present invention can be used for food contact applications by reducing the amount of the polyhydric alcohol component having a sulfonate group. Examples of the polyhydric alcohol component having a sulfonate group include a sodium salt of 2-sulfo-1,4-butanediol and a sodium salt of 2,5-dimethyl-3-sulfo-2,5-hexanediol.

In addition, in order to impart an acid value, an acid anhydride such as trimellitic anhydride and pyromellitic anhydride may be after-added after polymerization of the polyester resin. Examples of the acid anhydride for imparting the acid value specifically include trimellitic anhydride, pyromellitic anhydride, and ethylene glycol bisanhydrotrimellitate. These may be used singly or in combination of two or more kinds thereof. In the case of the after-addition, the total amount of the polycarboxylic acid component and the polyhydric alcohol component may exceed 200 mol%. In this case, the total amount of the composition excluding the after-added components such as acid anhydride is taken as 200 mol%, and the calculation is performed based thereon.

In producing the polyester resin of the present invention, for example, titanium compounds such as tetra-n-butyl titanate, tetraisopropyl titanate, and titanium oxyacetylcetonate; antimony compounds such as antimony trioxide and tributoxyantimony; germanium compounds such as germanium oxide and tetra-n-butoxygermanium; and acetate salts of metals such as magnesium, iron, zinc, manganese, cobalt, and aluminum can be used as a polymerization catalyst. These catalysts may be used singly or in combination of two or more kinds thereof.

The method of the polymerization condensation reaction for producing the polyester resin of the present invention is not particularly limited, and examples thereof include 1) a method in which a polycarboxylic acid and a polyhydric alcohol are heated in the presence of an arbitrary catalyst, then a dehydration-esterification step is performed, and then a de-polyhydric-alcoholization/polycondensation reaction is performed; and 2) a method in which an alcohol ester product of a polycarboxylic acid and a polyhydric alcohol are heated in the presence of an arbitrary catalyst, then a transesterification reaction is performed, and then a de-polyhydric-alcoholization/polycondensation reaction is performed. In the methods 1) and 2), a part or the whole of the acid component may be substituted with an acid anhydride.

The glass transition temperature (Tg) of the polyester resin of the present invention is 20°C or lower, preferably -5 to 20°C, more preferably 0 to 20°C, and further preferably 5 to 15°C. By setting the glass transition temperature to the above lower limit or more, occurrence of blocking can be suppressed when a laminated film is wound into a roll. In addition, by setting the glass transition temperature to the above upper limit or less, the resin has flexibility even at the time of peeling at room temperature, and the adhesiveness is improved.

The reduced viscosity (ηsp/c) of the polyester resin of the present invention is preferably 0.2 to 0.9 dl/g, more preferably 0.3 to 0.8 dl/g and further preferably 0.4 to 0.7 dl/g. By setting the reduced viscosity to the above lower limit or more, the resin cohesive force is improved, and excellent adhesiveness can be exhibited. In the meantime, by setting the reduced viscosity to the above upper limit or less, an aqueous dispersion can be prepared. The reduced viscosity can be arbitrarily adjusted by changing the polymerization time and polymerization temperature of the polyester resin and the degree of vacuum (in the case of vacuum polymerization) during polymerization.

The acid value of the polyester resin of the present invention is 150 to 500 eq/t. By setting the acid value to the above upper limit or less, the resin cohesive force is improved because the molecular weight is not low, and excellent adhesiveness can be exhibited. In the meantime, by setting the acid value to the above lower limit or more, an aqueous dispersion can be prepared.

The number average molecular weight (Mn) of the polyester resin of the present invention is preferably 4000 to 40000, more preferably 6000 to 35000 and further preferably 8000 to 30000. By setting the number average molecular weight to the above lower limit or more, the resin cohesive force is improved, and excellent adhesiveness can be exhibited. In the meantime, by setting the number average molecular weight to the above upper limit or less, an aqueous dispersion can be prepared. The number average molecular weight can be arbitrarily adjusted by changing the polymerization time and polymerization temperature of the polyester resin and the degree of vacuum (in the case of vacuum polymerization) during polymerization. The number average molecular weight is a value measured by gel permeation chromatography (hereinafter referred to as GPC, standard substance: polystyrene resin, mobile phase: tetrahydrofuran or chloroform) .

### <Aqueous dispersion of polyester resin>

The aqueous dispersion of polyester resin of the present invention contains the polyester resin and water, and contains an organic solvent depending on necessity.

The boiling point of the organic solvent used for the aqueous dispersion of polyester resin of the present invention is preferably 60°C or higher, more preferably 70°C or higher, and further preferably 80°C or higher. By setting the boiling point to 60°C or higher, a handling during a coating process becomes to be easy in view of volatility of the solvent. Also, the boiling point is preferably 180°C or lower, more preferably 175°C or lower, further preferably 170°C or lower, particularly preferably 165°C or lower, and the most preferably 160°C or lower. By setting the boiling point to 180°C or lower, there is almost no residual solvent during drying, and problems such as occurrence of blocking during winding do not occur.

The organic solvent used for the aqueous dispersion of polyester resin of the present invention is not particularly limited, and examples thereof include alcohols such as isopropyl alcohol, isobutyl alcohol, and isoamino alcohol; ethylene glycol monomethyl ether, ethylene glycol monoethyl ether, ethylene glycol monoisopropyl ether, ethylene glycol monobutyl ether (hereinafter also referred to as "n-butyl cellosolve" or "n-BuCS"), ethylene glycol mono-tert-butyl ether (hereinafter also referred to as "t-butyl cellosolve" or "t-BuCS"), propylene glycol monobutyl ether, and methyl ethyl ketone. These organic solvents may be used singly or in combination of two or more kinds thereof. Among them, isopropyl alcohol, n-butyl cellosolve and t-butyl cellosolve are particularly preferable.

The amount of the organic solvent is preferably 200 parts by mass or less, more preferably 150 parts by mass or less, further preferably 100 parts by mass or less with respect to 100 parts by mass of the polyester resin. By setting the amount of the organic solvent to the above upper limit or less, residual solvent during drying becomes less, and problems such as occurrence of blocking during winding do not occur. In addition, the storage stability is also improved. The lower limit is not particularly limited. The organic solvent may be completely removed by vacuum concentration etc. after dispersing the resin. However, from industrial view, 1 part by mass or more of the remaining organic solvent is acceptable and even 10 parts by mass or more of the remaining organic solvent is acceptable.

The particle size of the polyester resin phase contained in the aqueous dispersion of polyester resin of the present invention is preferably 30 nm or more, more preferably 40 nm or more, further preferably 50 nm or more, and particularly preferably 60 nm or more. By setting the particle size to the above lower limit or more, film formability is improved, fusion and aggregation of dispersed particles are suppressed, and thickening and dispersion failure do not occur. Also, the particle size is preferably 500 nm or less, more preferably 450 nm or less, and further preferably 400 nm or less. By setting the particle size to the above upper limit or less, excellent dispersion stability and film formability can be maintained, and the appearance and performance of the resulting film are improved. Here, the particle size refers to the particle size of the polyester resin. When two or more kinds of polyester resins are contained, such as when another polyester resin is contained, the particle size refers to the average particle size of the two or more kinds of polyester resins.

The aqueous dispersion of polyester resin of the present invention can be suitably used as a raw material of a coating agent or a heat sealing agent in addition to an adhesive, and is particularly suitable for adhesive applications.

### <Adhesive composition>

The adhesive composition of the present invention contains the aqueous dispersion of polyester resin as an essential component.

The adhesive composition of the present invention can be used by blending other polyester resins, aqueous dispersions thereof, and various additives as long as the performance of the present invention is not impaired. The additives are not particularly limited, but an anti-blocking agent or the like is preferably used.

Examples of the anti-blocking agent include inorganic particles, organic particles, and waxes. These can be contained to such an amount that does not lower the adhesiveness and the blocking resistance. These anti-blocking agents may be used singly or in combination of two or more kinds thereof. When the anti-blocking agent is contained, the content thereof is preferably 0.1 parts by mass or more and more preferably 0.2 parts by mass or more with respect to 100 parts by mass of the polyester resin. By setting the content of the anti-blocking agent to the above lower limit value or more, the effect of blocking resistance can be exhibited. Also, the content of the anti-blocking agent is preferably 20 parts by mass or less and more preferably 15 parts by mass or less. By setting the content of the anti-blocking agent to the above upper limit or less, adhesiveness can be maintained.

Examples of the inorganic particles include inorganic particles containing oxides, hydroxides, sulfates, carbonates, silicates, or the like of metals such as magnesium, calcium, barium, zinc, zirconium, molybdenum, silicon, antimony, and titanium. Among these inorganic particles, silica gel particles are particularly preferable. The shape of the particles may be any shape such as a powder shape, a particulate shape, a granular shape, a flat plate shape, and a needle shape and is not limited.

Examples of the organic particles include particles of a polymer such as a polymethyl methacrylate resin, a polystyrene resin, a nylon resin, a melamine resin, a benzoguanamine resin, a phenol resin, a urea resin, a silicone resin, a methacrylate resin, and an acrylate resin; cellulose powder, nitrocellulose powder, wood powder, waste paper powder, rice husk powder, and starch. The polymer particles can be obtained by a polymerization method such as emulsion polymerization, suspension polymerization, dispersion polymerization, soap-free polymerization, and microsuspension polymerization. The organic particles can be used to such an extent that the effects of the present invention are not impaired. The shape of the particles may be any shape such as a powder shape, a particulate shape, a granular shape, a flat plate shape, and a needle shape and is not limited.

Specific examples of the waxes include hydrocarbon waxes such as liquid paraffin, natural paraffin, microwax, synthetic paraffin, and polyethylene wax; fatty acid waxes such as stearic acid; fatty acid amide waxes such as stearic acid amide, palmitic acid amide, methylene bis(stearamide), ethylene bis(stearamide), oleic acid amide, and esylic acid amide; ester waxes such as lower alcohol esters of fatty acids; polyhydric alcohol esters of fatty acids, and polyglycol esters of fatty acids; alcohol waxes such as cetyl alcohol and stearyl alcohol; natural waxes such as olefinic wax, castor wax, and carnauba wax; and metal soaps derived from fatty acids having 12 to 30 carbon atoms. The waxes can be used to such an extent that the effects of the present invention are not impaired.

### <Laminated product>

The laminated product of the present invention is a film or a metal foil in which an adhesive layer formed of an adhesive composition of the present invention is laminated on at least one surface of a substrate film or a substrate metal foil. Such a laminated product is obtained by applying the adhesive composition to the substrate film or the substrate metal foil, and then performing a drying treatment.

The substrate film is not particularly limited as long as an adhesive layer can be formed of the adhesive composition of the present invention, but a thermoplastic resin film or a metal-coated thermoplastic film is preferable. Examples of the thermoplastic resin film include a polyester-based resin film, a polypropylene-based resin film, a polyamide-based resin film, a polyvinyl alcohol-based resin film, and a polyvinylidene chloride-based resin film. Among them, a polyester-based resin film is more preferable because it is suitable as a lid member of a food packaging container. As to the metal-coated film, examples thereof include a film which has been vapor-deposited with aluminum, or a film which has been vapor-deposited with an inorganic filler such as alumina and/or silicon.

As to the substrate metal foil, there is no particular limitation as far as adhesive layer can be formed of the adhesive composition of the present invention. An aluminum foil is preferable because it is suitable as a lid member of a food packaging container and a blister pack for pharmaceuticals.

Since the laminated product of the present invention is excellent in adhesiveness, it is suitable as a constituent component of a packaging material or a blister pack for pharmaceuticals. Among them, it is suitable as a lid member of a food packaging container for fresh food, processed food such as yogurt, or the like. When used as a lid member of a food packaging container, contents of the container can be sealed by heat-sealing the adhesive layer surface of the laminated product and the food packaging container. The food packaging container is not particularly limited but is preferably made of a polyester-based resin, a polystyrene-based resin, a polyvinyl chloride-based resin, or a polypropylene-based resin.

### Examples

As hereunder, the present invention will be more specifically illustrated by referring to Examples although the present invention is not limited to those Examples. A term "part (s)" in Examples and Comparative Examples (text) stand(s) for part(s) by mass.

### (Methods for evaluating physical properties)

### Measurement of composition of polyester resin

Using a 400-MHz ¹H-nuclear magnetic resonance spectrometer (¹H-NMR), molar proportions of a polycarboxylic acid component and a polyhydric alcohol component constituting the polyester resin were determined. As a solvent, deuterated chloroform was used.

### Glass transition temperature (Tg)

In an aluminum snap-in lid type container, 5 mg of a sample (polyester resin for heat-sealing) was sealed and subjected to a measurement at a temperature rising rate of 20°C/min from -100°C to 250°C, using a differential scanning calorimeter (DSC) DSC-220 manufactured by Seiko Instruments Inc. The glass transition temperature was determined by the temperature at the intersection of the extended line of the baseline equal to or lower than the glass transition temperature and the tangent indicating the maximum inclination between the rising portion of the peak and the apex of the peak.

### Measurement of reduced viscosity (unit: dl/g)

The reduced viscosity was measured using an Ubbelohde viscometer at a sample (polyester resin) concentration of 0.1 g/25 ml and a measurement temperature of 30°C using phenol/tetrachloroethane (mass ratio: 6/4) as a measurement solvent.

### Measurement of acid value

In 40 ml of chloroform, 0.2 g of a sample of the polyester resin was dissolved, and the resulting solution was titrated with a 0.01 N ethanol solution of potassium hydroxide so as to determine an equivalent per 10⁶ g (eq/t) of the polyester resin. Phenolphthalein was used as an indicator.

### Storage stability

An aqueous dispersion of polyester resin was stored (left standing) at 25°C for 6 months. After that, changes in appearance and shape (viscosity) were inspected.

### <Evaluation criteria>

∘: No change was observed in the appearance and shape (viscosity).
Δ: Although cloudiness occurred, the shape (viscosity) did not change.
×: An increase in viscosity occurred, or separation occurred, or dispersion failure occurred.

### Preparation of laminated film and laminated aluminum foil for evaluation

Each of the adhesive compositions obtained in Examples and Comparative Examples was applied to an aluminum foil having a thickness of about 20 µm so that the thickness after drying would be 4 to 5 µm. Then, drying was performed at 150°C for 30 seconds so as to obtain a laminated aluminum foil for evaluation.

### Peel strength (adhesiveness)

The adhesive layer surface of the laminated aluminum foil for evaluation was heat-sealed to each substrate of A-PET sheet, polystylene sheet, and polyvinyl chloride sheet having a thickness of about 850 µm at a temperature of 200°C and a pressure of 4.5 kgf/cm² for 1 second. Thereafter, a test piece having a width of 15 mm was cut out and subjected to a 180° peel test at 25°C and a tensile speed of 100 mm/min, and the peel strength was measured.

### <Evaluation criteria>

∘∘: To all substrates, the peel strength was 1000 gf/15 mm or more.
∘: To all substrates, the peel strength was 800 gf/15 mm or more.
×: To some of the substrates, the peel strength did not reach to 800 gf/15 **mm.**

### Synthesis of polyester resin (A-1)

A reaction can equipped with a stirrer, a thermometer, a heater, a cooling device, and a distillation cooler was charged with 534 parts by mass of isophthalic acid, 141 parts by mass of 1,4-cyclohexanedicarboxylic acid, 12 parts by mass of trimellitic anhydride, 652 parts by mass of diethylene glycol, and 0.5 part by mass of tetrabutyl titanate. While the temperature was raised to 220°C, the esterification reaction was carried out over 4 hours. After completion of the esterification reaction, the pressure in the system was reduced to 10 torr over 60 minutes while the temperature was raised to 250°C. Then, the pressure was further reduced to a vacuum of 1 torr or less, and a polycondensation reaction was performed at 250°C so as to reach a predetermined viscosity. Thereafter, nitrogen was flowed into the system, the system was cooled to 220°C, 24 parts by mass of trimellitic anhydride was added, and the mixture was allowed to react for 30 minutes. After completion of the reaction, the polyester resin was taken out and cooled whereby a polyester resin (A-1) was obtained. The measurement results of the resin composition and physical properties are shown in Table 1.

### Synthesis of polyester resins (A-2) to (A-12)

Polyester resins (A-2) to (A-12) were synthesized in the same manner as in the polyester resin (A-1) synthesis example, except that types and compounding ratios of the raw materials were changed. The measurement results of the resin composition and physical properties are shown in Table 1.

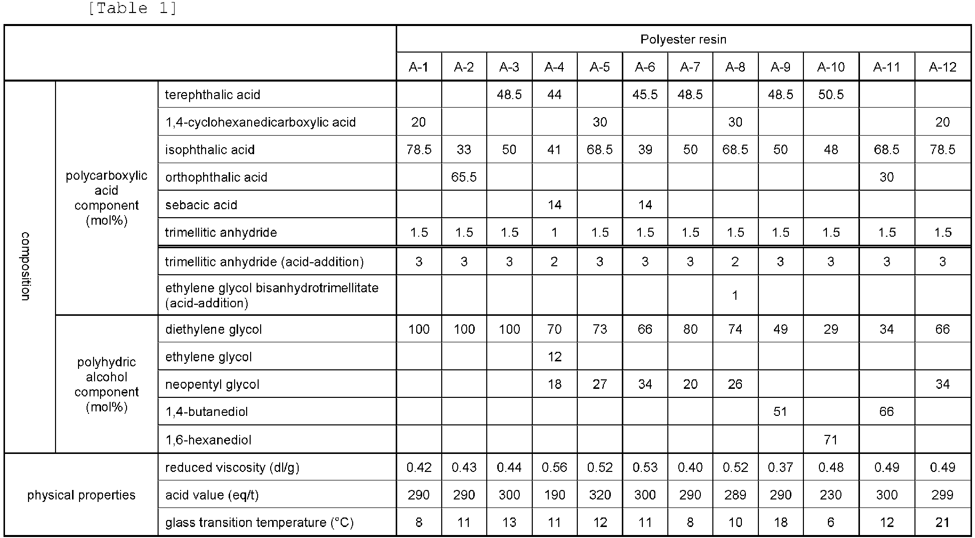

### Example 1

### Preparation example of aqueous dispersion of polyester resin (B)

### Preparation of aqueous dispersion of polyester resin (B-1)

The polyester resin (A-1) was dispersed in water according to the following procedure. A reaction vessel equipped with a stirrer, a condenser, and a thermometer was charged with 990 parts of the polyester resin (A-1), 578 parts of isopropanol, 1733 parts of water, and 18 parts of 28% ammonia water, and the resulting mixture was stirred for 4 hours at 75°C. The resulting product was cooled down to room temperature and then taken out of the reaction vessel, thereby obtaining an aqueous dispersion of polyester resin (B-1). The results of various characteristic evaluations are shown in Table 2.

### Examples 2 to 8 and Comparative Examples 1 to 4

Aqueous dispersions of polyester resins (B-2) to (B-12) were obtained in the same manner as in the preparation example of Example 1, except that types of the polyester resins were changed. The results of various characteristic evaluations are shown in Table 2.

**[Table 2]**

| | | | Example 1 | Example 2 | Example 3 | Example 4 | Example 5 | Example 6 | Example 7 | Example 8 |
|---|---|---|---|---|---|---|---|---|---|---|
| composition of aqueous dispersion of polyester resin (parts by mass) | | | B-1 | B-2 | B-3 | B-4 | B-5 | B-6 | B-7 | B-8 |
| | polyester resin | | A-1 | A-2 | A-3 | A-4 | A-5 | A-6 | A-7 | A-8 |
| | | | 990 | 660 | 990 | 990 | 990 | 990 | 990 | 990 |
| | water | | 1733 | 1980 | 1650 | 1650 | 1650 | 1650 | 1650 | 1650 |
| | isopropanol | | 578 | 660 | 660 | 660 | 660 | 660 | 660 | 660 |
| | 28% ammonia water | | 18 | 18 | 19 | 12 | 20 | 19 | 18 | 18 |
| storage stability stability | evaluation | | o | o | o | o | o | o | o | o |
| peel strength | peel strength [gf/15 mm] | polyvinyl chloride | 1187 | 1156 | 1052 | 1152 | 1052 | 1023 | 950 | 1075 |
| | | polystylene | 1030 | 1213 | 900 | 1070 | 1225 | 1106 | 880 | 1218 |
| | | A-PET | 994 | 1062 | 980 | 1022 | 1081 | 1121 | 1012 | 1115 |
| | evaluation | | o | oo | o | oo | oo | oo | o | oo |

| | | | Comparative Example 1 | Comparative Example 2 | Comparative Example 3 | Comparative Example 4 |
|---|---|---|---|---|---|---|
| composition of aqueous dispersion of polyester resin (parts by mass) | | | B-9 | B-10 | B-11 | B-12 |
| | polyester resin | | A-9 | A-10 | A-11 | A-12 |
| | | | 660 | 660 | 660 | 660 |
| | water | | 1980 | 1980 | 1980 | 1980 |
| | isopropanol | | 660 | 660 | 660 | 660 |
| | 28% ammonia water | | 18 | 15 | 19 | 19 |
| storage stability | evaluation | | o | o | o | o |
| peel strength | peel strength [gf/15 mm] | polyinyl chloride | 793 | 750 | 1007 | 487 |
| | | polystylene | 531 | 768 | 630 | 382 |
| | | A-PET | 327 | 602 | 1158 | 776 |
| | evaluation | | × | × | × | × |

As is apparent from Table 2, in Examples 1 to 8, the aqueous dispersions of polyester resin exhibit good adhesiveness to all of the three types of substrates. In the meantime, in Comparative Examples 1 to 3, the aqueous dispersions of polyester resin exhibit low adhesiveness to some of the substrates due to small amount of diethylene glycol. In Comparative Example 4, Tg is high in spite of large amount of diethylene glycol, which results in low adhesiveness.

### Industrial Applicability

The adhesive composition containing the polyester resin of the present invention and the laminated product using the same are excellent in adhesiveness to various substrates when heat-sealed as a lid member for a packaging container.

## Claims

1. A polyester resin containing a polycarboxylic acid component and a polyhydric alcohol component as constitution units, wherein, when the total amount of the polyhydric alcohol component is taken as 100 mol%, the content of diethylene glycol component is 60 mol% or more, and wherein the glass transition temperature of the polyester resin is 20°C or lower, determined as indicated in the specification, wherein, when the total amount of the polycarboxylic acid component is taken as 100 mol%, the content of an aromatic dicarboxylic acid component having a sulfonate group is 0.1 mol% or less, and wherein the acid value of the polyester resin is 150 to 500 eq/t.

2. An aqueous dispersion of polyester resin containing the polyester resin according to claim 1.

3. An adhesive composition containing the aqueous dispersion of polyester resin according to claim 2.

4. A laminated product prepared by laminating an adhesive layer formed of the adhesive composition according to claim 3, and a thermoplastic resin film or an aluminum foil.

5. The laminated product according to claim 4, wherein the thickness of the adhesive layer is in the range of 1 to 10 µm.

6. A packaging material comprising the laminated product according to claim 4 or 5 as a constituent component.

7. A blister pack comprising the packaging material according to claim 6 as a constituent component.

8. A lid member for a food packaging container comprising the packaging material according to claim 6 as a constituent component.

9. A food packaging container constituted of a laminate of the lid member according to claim 8 and a polyester-based resin or an aluminum foil.

## Patentansprüche

1. Polyesterharz, enthaltend eine Polycarbonsäurekomponente und eine Polyalkoholkomponente als Struktureinheiten, wobei, wenn die Gesamtmenge der Polyalkoholkomponente als 100 Mol-% angenommen wird, der Gehalt einer Diethylenglykolkomponente 60 Mol-% oder mehr beträgt und wobei die Glasübergangstemperatur des Polyesterharzes, bestimmt wie in der Beschreibung angegeben, 20°C oder weniger beträgt, wobei, wenn die Gesamtmenge der Polycarbonsäurekomponente als 100 Mol-% angenommen wird, der Gehalt einer aromatischen Dicarbonsäurekomponente mit einer Sulfonatgruppe 0,1 Mol-% oder weniger beträgt, und wobei der Säurewert des Polyesterharzes 150 bis 500 Äq/t beträgt.

2. Wässrige Polyesterharzdispersion, enthaltend das Polyesterharz nach Anspruch 1.

3. Haftstoffzusammensetzung, enthaltend die wässrige Polyesterharzdispersion nach Anspruch 2.

4. Laminiertes Produkt, hergestellt durch das Laminieren einer Haftschicht, gebildet aus der Haftstoffzusammensetzung nach Anspruch 3, und einer thermoplastischen Harzfolie oder einer Aluminiumfolie.

5. Laminiertes Produkt nach Anspruch 4, wobei die Dicke der Haftschicht in dem Bereich von 1 bis 10 µm ist.

6. Verpackungsmaterial, umfassend das laminierte Produkt nach Anspruch 4 oder 5 als einen Bestandteil.

7. Blisterverpackung, umfassend das Verpackungsmaterial nach Anspruch 6 als einen Bestandteil.

8. Deckelelement für einen Lebensmittelverpackungsbehälter, umfassend das Verpackungsmaterial nach Anspruch 6 als einen Bestandteil.

9. Lebensmittelverpackungsbehälter, zusammengesetzt aus einem Laminat des Deckelelements nach Anspruch 8 und einem polyesterbasierten Harz oder einer Aluminiumfolie.

## Revendications

1. Résine polyester contenant un composant acide polycarboxylique et un composant alcool polyhydrique comme unités de constitution, dans laquelle, lorsque la quantité totale du composant alcool polyhydrique est prise comme 100 % en moles, la teneur en composant diéthylène glycol est de 60 % en moles ou plus, et dans laquelle la température de transition vitreuse de la résine polyester est de 20 °C ou moins, déterminée comme indiqué dans la description, dans laquelle, lorsque la quantité totale du composant acide polycarboxylique est prise comme 100 % en moles, la teneur en un composant acide dicarboxylique aromatique ayant un groupe sulfonate est de 0,1 % en moles ou moins, et dans laquelle l'indice d'acide de la résine polyester est de 150 à 500 éq/t.

2. Dispersion aqueuse de résine polyester contenant la résine polyester selon la revendication 1.

3. Composition adhésive contenant la dispersion aqueuse de résine polyester selon la revendication 2.

4. Produit stratifié préparé par la stratification d'une couche adhésive formée de la composition adhésive selon la revendication 3, et d'un film de résine thermoplastique ou d'une feuille d'aluminium.

5. Produit stratifié selon la revendication 4, dans lequel l'épaisseur de la couche adhésive est dans la plage de 1 à 10 µm.

6. Matériau d'emballage comportant le produit laminé selon la revendication 4 ou 5 en tant que composant constitutif.

7. Emballage-coque comportant le matériau d'emballage selon la revendication 6 en tant que composant constitutif.

8. Élément formant couvercle pour un contenant d'emballage alimentaire comportant le matériau d'emballage selon la revendication 6 en tant que composant constitutif.

9. Contenant d'emballage alimentaire constitué d'un stratifié de l'élément formant couvercle selon la revendication 8 et d'une résine à base de polyester ou d'une feuille d'aluminium.
